Europäisches Patentamt

European Patent Office

Office européen des brevets

(19)

(11) Publication number: **0 000 959**
**B1**

# EUROPEAN PATENT SPECIFICATION

(12)

(45) Date of publication of patent specification: **30.09.81**

(21) Application number: **78100793.5**

(22) Date of filing: **30.08.78**

(51) Int. Cl.³: **H 05 B 6/68,** G 05 D 22/02, G 01 D 21/02

(54) Method of cooking thin meat bodies in a microwave oven.

(30) Priority: **30.08.77 US 829075**

(43) Date of publication of application:
**07.03.79 Bulletin 79/05**

(45) Publication of the grant of the European patent:
**30.09.81 Bulletin 81/39**

(84) Designated Contracting States:
**BE DE FR GB LU NL SE**

(56) References cited:
**DE - A - 2 706 367**
**DE - B - 1 090 798**
**FR - A - 2 312 067**
**US - A - 3 654 417**
**US - A - 4 011 428**

(73) Proprietor: **Litton Systems, Inc.**
**360 North Crescent Drive**
**Beverly Hills, California 90210 (US)**

(72) Inventor: **Buck, Ronald G.**
**13112 Thomas Avenue South**
**Burnsville, Minnesota 55337 (US)**

(74) Representative: **Kinkeldey, Hermann, Dr.-Ing.**
**Patentanwälte Dipl.-Ing. A. Grünecker, Dr.-Ing. H. Kinkeldey, Dr.-Ing. et al,**
**W. Stockmair, Dr. rer. nat. K. Schumann Dipl.-Ing. P. Jakob Dr. rer. nat. G. Bezold Maximilianstrasse 43**
**D-8000 München 22 (DE)**

Courier Press, Leamington Spa, England.

## Method of cooking thin meat bodies in a microwave oven

This invention relates to a method of cooking thin meat bodies in a microwave oven.

Those concerned with microwave cooking of a thin piece of meat in a microwave oven have long recognized the need to accurately determine the temperature of the meat.

Past prior art devices have been extremely unreliable in determining the surface and internal temperature of meat. Initial prior art attempts at determining the internal doneness of meat was to insert a thermometer into the microwave energy radiation, but the disadvantage was that the thermometer only indicated the internal temperature of the meat at· one particular location and was not a true overall indication of the equilibrium internal doneness of the meat.

Another current prior art device for measuring the internal temperature of meats being cooked is to insert a temperature probe into the meat while in the microwave oven heating cavity which connects to the control circuitry of the microwave oven. While the temperature probe is accurate in indicating the temperature of the meat being cooked by microwave energy, the probe only senses the temperature of the immediate area surrounding the probe and does not take into account the equilibrium state of the internal temperature of the meat. If the temperature of the meat is not uniform and the probe is placed at a hot spot in the meat, the readings from the temperature probe are not indicative of the internal doneness of the meat.

Further, the probe which is inserted into the meat is cumbersome and bulky for the cook who is trying to monitor the internal doneness of the meat during the microwave cooking in the microwave oven heating cavity. For a thin piece of meat being approximately equal to or less than one wavelength, it is difficult for a cook, if not impossible, to insert a temperature probe into the meat as the thickness is approximately no greater than one centimeter.

DE - OS 2 706 367 describes a method for determining the time at which the energy source of a microwave oven is to be switched off in order to get a foodstuff done to a predetermined value. In this known method the humidity is measured to detect a characteristic increase in humidity during cooking time. Dependent on occurrence of this increase in humidity, switch-off time is calculated by the formula $T = (1 + k)T_D$, wherein k is a constant depending on the used foodstuff and $T_D$ is the time from switching on the energy source until occurrence of the measured increase is humidity. This method, however, leads to unsatisfactory results in the case that the increase of humidity extends over a comparatively long period of time.

The present invention obviates the foregoing disadvantages of the prior art by providing a method of cooking thin meat bodies in a microwave oven and determining the accurate switch-off time.

The present invention provides for a method for cooking thin meat bodies in a microwave oven wherein the time dependent "in-situ" humidity and temperature environmental conditions of a microwave oven heating cavity are sensed and sampled, the absolute humidity is determined from the sampled "in-situ" · humidity and temperature, the absolute humidity is determined at a plurality of points on a "characteristic humidity curve", and the temperature of the meat is determined from the slope of the sampled points of the "characteristic humidity curve".

A significant aspect and feature of the present invention is that the claimed method provides for the determination of the temperature of a thin meat body being cooked in the microwave oven. Since the meat is thin, that is being approximately equal to or less than one skin depth which for 2450 megahertz is one centimeter, the surface temperature of the meat is equal to the internal temperature of the meat.

Another advantage of the invention is the determination when the thin piece of meat is cooked to doneness by sensing the dependent "in-situ" humidity and the temperature environmental conditions of the microwave oven heating cavity. The term "in-situ" as used in this application is defined as the actual time dependent environmental conditions which exist in the environment surrounding the thin meat which is located in and cooked in the microwave oven heating cavity. Although in the present invention, a humidity sensor and temperature sensor may be positioned outside of the microwave oven heating cavity, the sensors are configured to sense the "in-situ" environmental conditions of the microwave oven heating cavity and provide "in-situ" signal information of the environmental conditions of the microwave oven heating cavity to a programmable controller controlling the microwave oven.

Preferred embodiments of the invention are included in the sub-claims.

Other objects and many of the attendant advantages of this invention will be readily appreciated as the same becomes better understood by reference to the following detailed description when considered in connection with the accompanying drawings, wherein:

Fig. 1 illustrates a flow chart chart of the method of cooking thin meat in a microwave oven in accordance with the present invention, and;

Fig. 2 illustrates a typical "characteristic humidity curve" for the present invention.

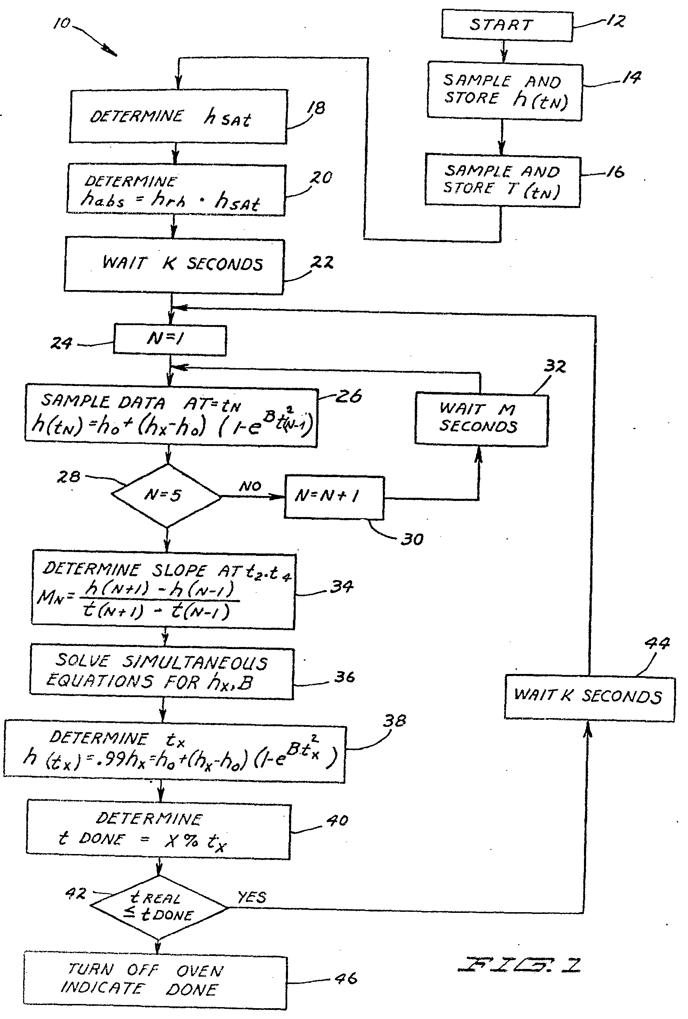

Figure 1 illustrates a flow chart 10 of the method of cooking thin meat in accordance with the present invention. The flow chart provides for the solving of the equation

$$h(t_n) = h_o + (hx - h_o) . (1 - e^{-Bt2}n) \text{ eq. 1}$$

where equation 1 is a "characteristic humidity curve" for thin meat having a thickness approximately equal to or less than one skin depth. $h_o$ is the ambient absolute humidity, $h_x$ is the peak absolute humidity, and B is a coefficient, characteristic of meats having units of 1/seconds$^2$.

The flow chart 10 starts at 12 where the "in-situ" relative humidity of the microwave oven heating cavity is sampled and stored 14, the "in-situ" temperature of the microwave oven heating cavity is sampled and stored 16, the saturated humidity 18 is determined, and the absolute humidity 20 is determined from the multiplication of the relative humidity times the saturated humidity.

The program after waiting K seconds 22, then sets n equal to 1 at 24 and initiates by sampling data 26 at four points to compute the slope of the "characteristic humidity curve" for the algorithm of equation 1 for the method. Until n equals five 28 condition is satisfied, n is incremented by one 30 waiting m seconds 32 between each sample. Data 26 is sampled at four points satisfying conditions 28 and 30 waiting m seconds 32 between each sample. When n equals five 28 condition occurs, the slope 34 is determined by solving the simultaneous equations 36 for $h_x$ and B. From determining the values of $h_x$ and B, $t_x$ is determined 38 and $t_{done}$ is equal to a percentage of $t_x$ 40 as the "characteristic humidity curve" proceeds to infinity and a cook is only interested in the plateau of the "characteristic humidity curve". When $t_{real}$ less than or equal to $t_{done}$ YES condition 42 exists, then the program recycles itself after waiting K seconds to again begin sampling data at four points to determine the slope 34, solve for $t_x$, etc. This continues to repeat until a $t_{real}$ equal to or less than $t_{done}$ NO condition 42 occurs at which time the microwave oven is turned off 46 and a done indication is given to the cook.

The method of cooking thin meat in a microwave oven is premised on the sensing concept based on the most fundamental cooking principles. That is, as microwave energy is converted to thermal energy, the internal temperature of the meat increases. As the internal temperature of the meat increases, some of the thermal energy is used to break the bonding forces holding the water molecules to the food's cell structure. When the latent heat of vaporization has been added to the food, these free water molecules are vaporized and released locally. Thus, the rate of evaporation is directly proportional to the rate of temperature rise. By monitoring time dependent "in-situ" environmental conditions of the microwave oven heating cavity with sensors, the meat's internal temperature, and surface temperature for a thin piece of meat being approximately less than or equal to one skin depth, are determined.

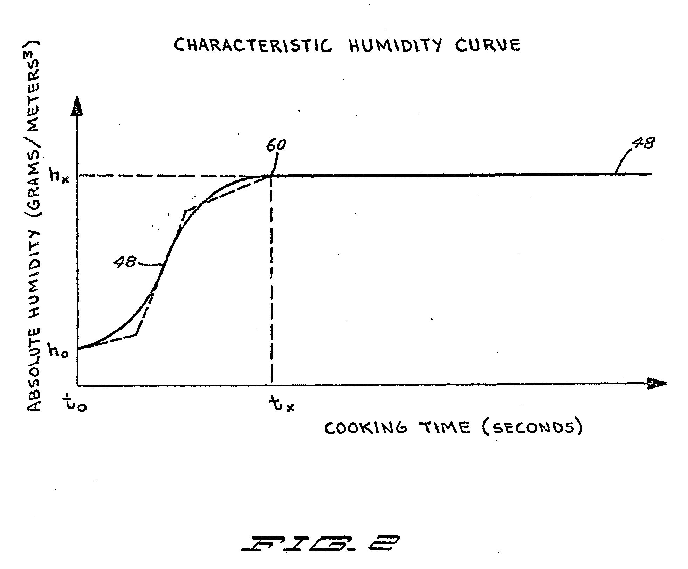

The "characteristic humidity curve" 48 of absolute humidity in grams per cubic meter versus cooking time in seconds of Figure 2 for the thin meat equation 1 is determined by sensing the time dependent "in-situ" humidity and temperature environmental conditions of the microwave oven heating cavity during microwave cooking of thin meats. The time dependent "in-situ" environmental conditions are defined as the sensed humidity and temperature of the microwave oven heating cavity by humidity and temperature sensors. Each particular cut of thin meat has its own particular "characteristic humidity curve". $h_o$ is the initial absolute humidity and $h_x$ is the peak absolute humidity at the time $t_x$ of the "characteristic humidity curve" 48.

Figure 2 depicts a characteristic humidity curve derived from a plot of absolute humidity versus elapsed cooking time. The changes in slope of the curve are indicative of the rate of evaporative water loss from the thin meat body effecting the absolute humidity in the cooking cavity. For purposes of the present method, the point of peak absolute humidity, $h_x$, indicated at 60, is or primary interest. The "characteristic humidity curve" 48 plateaus at point 60 indicating that surface temperature of the meat has reached equilibrium at one hundred degrees centigrade.

For small meat samples or with thicknesses small compared to the microwave depth of penetration, that is, being approximately equal to or less than one skin depth, the internal temperature is approximately and for all practical considerations, the same as the surface temperature from equation 1 for any point of the "characteristic humidity curve" of Figure 2.

The basic premise of the method is that as the relative humidity and temperature are sampled and stored, $h_x$ and B are computed by solving simultaneous equation 36 to predict when the one hundred degree centigrade point 60 occurs. The temperature is assumed linear between $h_o$ and one hundred degrees centigrade so that once $t_x$ is computed, the corresponding time for any other temperature may be computed such as to determine when $t_{done}$ is reached.

The method may be implemented in accordance with the flow chart 10 of Figure 1 as an algorithm stored in a programmable controller such as an Itel 8080 Microprocessor in the microwave oven. This algorithm of Figure 1 determines the temperature for a thin piece of meat for any point on the "characteristic humidity curve" of Figure 2.

An aluminium oxide humidity sensor, such as a Thunder Scientific TC—2000 Humidity Measurement Module, and a temperature sensor, such as a National Semiconductor Corporation LX 5700 Temperature Transducer, are positioned adjacent to and by the exit ventilation port to the exterior side of the microwave oven heating cavity for way of example and for purposes of illustration only to sense the time dependent "in-situ" environment conditions of the microwave oven heating cavity. The sensors can be positioned anywhere as long as the time dependent "in-situ" environmental conditions of the microwave oven heating cavity are sensed and the sensors are electromagnetically protected from the microwave oven heating cavity. The humidity sensor and the temperature sensor connect to the programmable controller having the steps of the algorithm of Figure 1 stored in the memory of the programmable controller. The programmable controller connects to control the microwave power source power supply and the air exchange circuit and turns the oven off when a NO condition exists at the $t_{real}$ is less than or equal to a predetermined $t_{done}$ decision point 42.

## Claims

1. Method for cooking foodstuff in a microwave oven, including a sensor for measuring the humidity of the microwave oven cooking cavity environment during cooking time, sensing the slope of the humidity-time curve and calculating the switch-off time from occurrence of a characteristic rise of the humidity-time curve, and switching off the energy source at the calculated doneness time, characterized in the following steps, wherein as foodstuff a thin meat body is used:
(a) measuring the humidity at a plurality of time-spaced intervals and storing these measurements;
(b) calculating the slope of the humidity-time curve from the measurements obtained in step (a);
(c) comparing the calculated slope with the slope of a characteristic humidity-time curve and calculating from said comparison result the time the foodstuff will reach thermal equilibrium at water boiling temperature, and
(d) calculating the time the meat body will reach a preselected doneness as a function of the thermal equilibrium time.

2. Method of claim 1 characterized in that for measuring the humidity of the microwave oven cooking cavity environment two sensors are used, sensing the cavity environment relative humidity and temperature, respectively and that the humidity measuring step includes the calculation of the absolute humidity of said cavity environment from the sensed relative humidity of said cavity environment and temperature.

3. Method of claim 1 or 2 characterised in that the characteristic humidity-time curve is described by the equation:

$$h_n = h_o + (h_x - h_o)\,(1 - e^{-B.t2}N)$$

wherein $h_n$ = absolute humidity at time interval N,
$h_o$ = absolute humidity at time interval N = 0,
$h_x$ = peak absolute humidity at thermal equilibrium,
B = a coefficient, characteristic of said thin meat body

4. Method of one of claims 1—3 characterised in that the characteristic humidity-time curve equation is stored in a microprocessor.

5. Method of one of claims 1—4 wherein said calculated doneness time is calculated as a preselected percentage of the thermal equilibrium time.

6. Method of claim 5 characterised in that the preselected percentage of the thermal equilibrium time is stored in the microprocessor.

7. Method of one of claims 1—6 characterised in steps (a) through (d) repeated in consecutive sequences and wherein the calculated doneness time is updated in each sequence.

## Patentansprüche

1. Verfahren zum Garen einer Speise in einem Mikrowellenherd, mit einem Sensor zum Festellten der Feuchtigkeit des Ofenraums während der Garungszeit, Feststellen des Anstiegs der Feuchtigkeits-Zeit-Kurve und Berechnen der Abschaltzeit aufgrund des Auftretens eines charakteristischen Anstiegs der Feuchtigkeits-Zeit-Kurve und Abschalten der Energiequelle bei der erreichten Endgarzeit, gekennzeichnet durch die folgenden Schritte, wobei als Speise ein dünnes Fleischstück benutzt wird:
(a) Messen der Feuchtigkeit in mehreren zeitlich getrennten Intervallen und Speichern dieser Messungen;
(b) Berechnen des Anstiegs der Feuchtigkeits-Zeit-Kurve aus den im Schritt (a) erhaltenen Messungen;
(c) Vergleichen des berechneten Anstiegs mit den anstieg einer charakteristischen Feuchtigkeits-Zeit-Kurve und Berechnender Zeit, in der die Speise ihr thermisches Gleichgewicht bei Wassersiedetemperatur erreichen wird unter Zugrundelegung dieses Vergleichsergebnisses, und
(d) Berechnen der Zeit, in der das Fleisch als Funktion der thermischen Gleichgewichtszeit einen vorgegebenen Garungsgrad erreichen wird.

2. Verfahren nach Anspruch 1, dadurch gekennzeichnet, daß zum Messen der Feuchtigkeit im Ofenraum zwei Sensoren Benutzt werden, die die relative Feuchtigkeit im ofenraum und die Temperatur jeweils messen und daß der Schritt der Feuchtigkeitsmessung die Berechnung der absoluten Feuchtigkeit aus der gemessenen relativen Feuchtigkeit im Ofenraum und der Temperatur einschließt.

3. Verfahren nach Anspruch 1 oder 2, dadurch gekennzeichnet, daß die charakteristische Feuchtigkeits-Zeit-Kurve durch die folgende Gleichung beschrieben wird:

$$h_n = h_o + (h_x - h_o)\ (1 - e^{-B.t2N})$$

worin bedeuten:

$h_n$ = absolute Feuchtigkeit zum Zeitintervall N,

$h_o$ = absolute Feuchtigkeit zum Zeitintervall N = 0,

$h_x$ = Spitze der absoluten Feuchtigkeit im thermischen Gleichgewicht,

$B$ = ein für das dünne Fleischstück charakteristischer Koeffizient.

4. Verfahren nach einem der Ansprüche 1 bis 3, dadurch gekennzeichnet, daß die charakteristische Feuchtigkeits-Zeit-Kurvengleichung in einem Mikroprozessor gespeichert wird.

5. Verfahren nach einem der Ansprüche 1 bis 4, worin die berechnete Garungszeit als vorgegebener Prozentsatz der thermischen Gleichgewichtszeit berechnet wird.

6. Verfahren nach Anspruch 5, dadurch gekennzeichnet, daß der vorgegebene Prozentsatz der thermischen Gleichgewichtszeit in einem Mikroprozessor gespeichert wird.

7. Verfahren nach einem der Ansprüche 1 bis 6, gekennzeichnet durch die Schritte (a) bis (d), die aufeinanderfolgend wiederholt werden und wobei in jeder Folge die berechneten Garungszeiten korrigiert werden.

## Revendications

1. Méthode pour cuire un aliment dans un four à hyperfréquences, comprenant un capteur de mesure de l'humidité de l'environnement d'une cavité de cuisson du four à hyperfréquences pendant le temps de cuisson, détectant la pente de la courbe humidité-temps et calculant l'instant d'arrêt à partir de l'apparition d'une montée caractéristique de la courbe humidité temps, et arrêtant la source d'énergie au temps calculé de cuisson à point, caractérisée par les étapes suivantes, dans lesquelles une mince pièce de viande est utilisée comme aliment, et qui consistent:

(a) à mesurer l'humidité à plusieurs intervalles expacés dans le temps et mémoriser ces mesures;

(b) à calculer la pente de la courbe humidité-temps à partir des mesures obtenues dans l'étape (a);

(c) à comparer la pente calculée avec la pente d'une courbe caractéristique humidité-temps et à calculer, à partir du résulat de ladite comparaison, le temps mis par l'aliment pour atteindre l'équilibre thermique à la température d'ébullition de l'eau, et

(d) à calculer le temps mis par la pièce de viande pour atteindre un degrè de cuisson présélectionné en fonction du temps d'équilibre thermique.

2. Méthode de la revendication 1, caractérisée en ce que, pour mesurer l'humidité de l'environnement de la cavité de cuisson du four à hyperfréquences, deux capteurs sont utilisés, détectant l'humidite relative et la température de l'environnement de la cavité, respectivement, et en ce que l'étape de mesure d'humidité comprend le calcul de l'humidité absolue dudit environnement de la cavité à partir de l'humidité relative détectée dudit environnement de la cavité et de la température.

3. Méthode de la revendication 1 ou 2, caractérisée en ce que la courbe caractéristique humidité-temps est décrite par l'équation:

$$h_n = h_o + (h_x - h_o)\ (1 - e^{-B.t2N})$$

dans laquelle:

$h_n$ = humidité absolue à l'intervalle de temps N,

$h_o$ = humidité absolue à l'intervalle de temps N = 0,

$h_x$ = humidité absolue de pointe à l'équilibre thermique,

$B$ = un coefficient, caractéristique de ladite pièce mince de viande.

4. Méthode de l'une des revendications 1—3, caractérisée en ce que l'équation de la courbe caractéristique humidité-temps est mémorisée dans un microprocesseur.

5. Méthode de l'une des revendications 1—4 dans laquelle ledit temps calculé de cuisson à point est calculé sous la forme d'un pourcentage présélectionné du temps d'équilibre thermique.

6. Méthode de la revendication 5, caractérisée en ce que le pourcentage présélectionné du temps d'équilibre thermique est mémorisé dans le microprocesseur.

7. Méthode de l'une des revendications 1—6, caractérisée par des étapes (a) à (d) répétées en cycles successifs et dans laquelle le temps calculé de cuisson à point est mis à jour dans chaque cycle.

**0 000 959**

START — 12

SAMPLE AND STORE $h(t_N)$ — 14

SAMPLE AND STORE $T(t_N)$ — 16

10

DETERMINE $h_{sat}$ — 18

DETERMINE $h_{abs} = h_{rh} \cdot h_{sat}$ — 20

WAIT $K$ SECONDS — 22

24 — $N=1$

SAMPLE DATA AT $=t_N$ — 26
$$h(t_N) = h_0 + (h_x - h_0)\left(1 - e^{Bt^2_{(N-1)}}\right)$$

WAIT $M$ SECONDS — 32

28 — $N=5$ — NO — $N=N+1$ — 30

DETERMINE SLOPE AT $t_2 \cdot t_4$ — 34
$$M_N = \frac{h(N+1) - h(N-1)}{t(N+1) - t(N-1)}$$

SOLVE SIMULTANEOUS EQUATIONS FOR $h_x, B$ — 36

DETERMINE $t_x$ — 38
$$h(t_x) = .99h_x = h_0 + (h_x - h_0)\left(1 - e^{Bt_x^2}\right)$$

DETERMINE $t_{DONE} = X\% \; t_x$ — 40

42 — $t_{REAL} \leq t_{DONE}$ — YES

WAIT $K$ SECONDS — 44

TURN OFF OVEN INDICATE DONE — 46

*FIG. 1*

1

## CHARACTERISTIC HUMIDITY CURVE

FIG. 2